# EUROPÄISCHE PATENTANMELDUNG

(11) **EP 0 564 929 A1**
(43) Veröffentlichungstag der Anmeldung: **13.10.1993**
(21) Anmeldenummer: 93105074.4
(22) Anmeldetag: 27.03.1993
(51) Int. Cl.: G01N 21/84, G01N 21/55

(54) **Verfahren zur Untersuchung der physikalischen Eigenschaften dünner elektro-optisch aktiver Schichten**

(30) Priorität: 08.04.1992 DE 4211693
(71) Anmelder: AUST, Emil F., Dr., D-55120 Mainz (DE)
(72) Erfinder: Fuchs, Harald, Prof. Dr., W-4405 Nottuln (DE); Knoll, Wolfgang, Dr., W-6500 Mainz (DE); Aust, Emil, Dr., W-6500 Mainz (DE)

(57) **Zusammenfassung**

Die Erfindung betrifft ein Verfahren zur Untersuchung der physikalischen Eigenschaften dünner elektro-optisch aktiver Substanzen.

Dies geschieht mit Hilfe polarisierten Lichtes, mit dem die zu untersuchende Schicht bestrahlt wird und das reflektierte Licht bzw. transmittierte Licht auf ein Abbildungssystem gelenkt wird, wobei in der zu untersuchenden Schicht durch die Einstrahlung des polarisierten Lichtes Lichtleitermoden angeregt werden, die sich im Falle einer elektro-optisch aktiven Schicht mit Hilfe eines angelegten modulierten elektrischen Feldes ebenfalls modulieren lassen.

## Beschreibung

Die vorliegende Erfindung betrifft ein Verfahren zur Untersuchung der physikalischen Eigenschaften dünner elektrooptisch aktiver Schichten mit Hilfe von polarisiertem Licht.

Aus der deutschen Offenlegungsschrift DE 39 14 631 A1 ist ein Verfahren zur Untersuchung der physikalischen Eigenschaften dünner Schichten mit Hilfe polarisierten Lichtes, mit dem die zu untersuchende Schicht oder das zu untersuchende Schichtsystem bestrahlt wird und das reflektierte Licht oder das transmittierte Licht auf ein Abbildungssystem gelenkt wird, bekannt. Weiterhin ist bekannt, daß nichtlineare optisch aktive dünne Schichten mit Hilfe von integralen Methoden untersucht werden können. Der Nachteil bei diesen Methoden besteht jedoch darin, daß der Analysenwert eine Mittelung über den gesamten Bereich des einfallenden Lichtes darstellt, das über eine Photodiode detektiert wird.

Abbildende optische Verfahren zu Untersuchung und Charakterisierung der physikalischen Eigenschaften von Oberflächen sind in vielen Bereichen der Technik von Interesse. Vor allem Untersuchungsmethoden für dünne und ultradünne elektro-optisch aktive dielektrische Schichten mit Dicken von einigen µm bis in den Sub-Nanometer-Bereich werden in Physik, Chemie, Informationsverarbeitung und im Bereich der Photonik in steigendem Maße benötigt. Ziel der Verfahren soll die Darstellung von Oberflächenstrukturen und Verteilung der funktionellen Eigenschaften mit möglichst großer Lateralauflösung und hohem Kontrast sein.

Zur Untersuchung dünner und ultradünner Schichten mit hohem Kontrast ist das Optische-Wellenleiter-Mikroskop, wie in der deutschen Offenlegungsschrift DE 39 14 631 A1 beschrieben, bekannt. Nachteil dieses Verfahrens ist es jedoch, daß zusätzliche Heterogenitäten in der elektro-optischen Schicht verursacht durch den Polungsprozeß nicht erkannt werden können. Eine Analyse nach den integralen Methoden von Cross (G.H. Cross, I.R. Girling, I.R. Peterson und N.A. Cade, Electron. Lett. 22, 1111, 1986), Levy (M. Dumont, Y. Levy und D. Morichere, Organic Molecules for Nonlinear Optics and Photonics. Edited by J. Messier, NATO ASI Series, Kluwer Academic Publisher, 1991) and Swalen (R.H. Page, M.C. Jurich, B. Reck, A. Sen, R.J. Twieg, J.D. Swalen, G.C. Björklund and C.G. Willson, J. Opt. Soc. Am. B, 7, 1990, 1239) erlauben lediglich eine gemittelte Aussage über das elektro-optische Verhalten. Eine umfangreiche Qualitätsüberprüfung ist somit nicht gegeben.

Der Erfindung lag daher die Aufgabe zugrunde, ein Verfahren anzugeben, das es mit geringem verfahrenstechnischem Aufwand ermöglicht, sowohl dünne als auch ultradünne Schichten und Schichtsysteme bezüglich Oberflächen-, Brechungsindex- und Polungsstrukturen, d.h. der Orientierungsverteilung der funktionalen Einheiten, mit hohem Intensitätskontrast, d.h. hoher vertikaler Auflösung, und guter Lateralauflösung zu untersuchen.

Diese Aufgabe wird erfindungsgemäß gelöst durch ein Verfahren zur Untersuchung der physikalischen Eigenschaften dünner Schichten mit Hilfe polarisierten Lichtes, mit dem die zu untersuchende Schicht oder das zu untersuchende Schichtsystem bestrahlt wird, und das reflektierte Licht oder das transmittierte Licht auf ein Abbildungssystem gelenkt wird, das dadurch gekennzeichnet ist, daß in der zu untersuchenden Schicht oder dem zu untersuchenden Schichtsystem durch die Einstrahlung des polarisierten Lichtes Lichtleitermoden angeregt werden, die aufgrund des angelegten modulierten elektrischen Feldes an der zu untersuchenden Probe laterale Unterschiede der elektro-optischen (EO) Eigenschaften abbilden.

Die zu untersuchende Schicht bzw. das zu untersuchende Schichtsystem kann dabei auf eine beliebige Festkörperoberfläche, beispielsweise eine Metall- oder Halbleiterschicht aufgebracht sein.

Zur Anregung von Lichtleitermoden in der zu untersuchenden Schicht bzw. dem zu untersuchenden Schichtsystem wird vorzugsweise eine Kopplungsanordnung verwendet.

Als Kopplungsanordnung wird vorzugsweise ein Prisma verwendet, wobei die zu untersuchende Schicht oder das zu untersuchende Schichtsystem direkt auf der mit einem Metall- oder Halbleiterfilm beschichteten Basisfläche des Prismas aufgebracht ist.

Als Kopplungsanordnung kann jedoch vorteilhafterweise auch eine Gitterstruktur auf einer Festkörperoberfläche verwendet werden, bei der auf eine vorher auf das Gitter aufgebrachte transmittierende und elektrisch leitfähige Schicht (z.B. ITO) die zu untersuchende Schicht oder das zu untersuchende Schichtsystem aufgebracht ist.

Zum Abbilden des nicht-linearen elektro-optischen Effekts werden zwei Elektroden an die zu untersuchende Schicht oder des zu untersuchenden Schichtsystems angebracht. Dabei dient vorzugsweise die Metall- oder Halbleiter-beschichtete Basisfläche des Prismas auf einer Seite der zu untersuchenden Schicht oder des zu untersuchenden Schichtsystems als Elektrode. Eine Gegenelektrode wird direkt auf der gegenüberliegenden Seite der zu untersuchenden Schicht oder des zu untersuchenden Schichtsystems aufgebracht.

Die Gegenelektrode kann vorzugsweise auch über isolierende Abstandshalter, wie z.B. Mylar-Folien, an die zu untersuchende Schicht oder an das zu untersuchende Schichtsystem in einem bestimmten Abstand herangeführt werden.

Vorteilhafterweise können die beiden Elektroden nebeneinander auf der zu untersuchenden Schicht oder des zu untersuchenden Schichtsystems angebracht werden. Hier kann somit gleichzeitig mit dem Polungsvorgang eine Wellenleiterstruktur eingeschrieben werden.

Überraschenderweise gelingt es mit dem erfindungsgemäßen Verfahren, mit geringem apparativem Aufwand Schichten mit Schichtdicken von 0.1 nm bis ca. 1 mm hinsichtlich Oberflächen-, Brechungsindex- und Polungsstrukturen zu untersuchen.

Lichtleitermoden in dünnen transparenten Medien werden von P.K. Tien in Rev. Mod. Phys. 49, 361 (1977) behandelt.

Lichtleitermoden sind elektromagnetische Wellen, die sich in transparenten dünnen Medien ausbreiten können. Die Welle breitet sich parallel zu den Grenzflächen des Mediums aus und ist in Ausbreitungsrichtung gedämpft. Das elektromagnetische Feld fällt an den Grenzflächen des Mediums expotentiell ab.

Zur Anregung von Lichtleitermoden in dünnen dielektrisch elektro-optisch aktiven Schichten werden im wesentlichen zwei Kopplungsanordnungen verwendet: Prismenkopplung (vgl. P.K. Tien, R. Ulrich, Appl. Phys. Lett. 14, 291 (1969)) und Gitterkopplung (vgl. D.G. Dalgoutte, C.D.W. Wilkinson, Appl. Optics, 14, 2983, (1975)).

Bei der Prismenkopplung trifft auf ein Prisma parallel (=p) oder senkrecht (=s) polarisiertes Licht, das an der Basisfläche des Prismas total reflektiert wird. Die zu untersuchende lichtleitende Schicht bzw. das Schichtsystem wird auf das mit einer Metall- oder Halbleiterschicht beschichtete Prisma aufgebracht und mit einer Gegenelektrode versehen. Bei geeigneter Wahl des Einstrahlwinkels des Lichtes wird in der zu untersuchenden Schicht bzw. dem Schichtsystem eine Lichtleitermode angeregt. Die Intensität des reflektierenden Lichtstrahls nimmt bei diesem Winkel ein Minimum an.

Bei der Gitterkopplung wird die Oberfläche eines Festkörpers durch ein Präge- oder Ätzverfahren in Form eines Liniengitters moduliert. Auf diese modulierte Oberfläche wird eine transmittierende und elektrisch leitfähige Schicht aufgebracht, auf diese die zu untersuchende Schicht oder das zu untersuchende Schichtsystem, das dann mit einer Gegenelektrode versehen wird. Wie bei der Prismenkopplung kann bei geeignetem Einstrahlwinkel des einfallenden p- oder s-polarisierten Lichtes eine Lichtleitermode in der zu untersuchenden Schicht bzw. dem Schichtsystem angeregt werden. Die Intensität des reflektierenden Lichtes nimmt auch hier ein Minimum an.

Lateralstrukturen einer zu untersuchenden Schicht bzw. eines Schichtsystems führen zu unterschiedlichen Kopplungsbedingungen für Lichtleitermoden. Trifft polarisiertes Licht unter einem festen Winkel auf eine der oben beschriebenen Probenanordnungen, so können Lateralstrukturen der zu untersuchenden Schicht bzw. des Schichtsystems aufgrund der unterschiedlichen Reflexion, d.h. ihrer unterschiedlichen Helligkeit erkannt werden. Bei Einstrahlung unter variablem Winkel kann die Kopplungsbedingung für verschiedene Bereiche der zu untersuchenden Schicht bzw. des Schichtsystems bei unterschiedlichen Einfallswinkeln erfüllt werden, wodurch Lateralstrukturen sichtbar gemacht werden.

Die laterale Auflösung wird durch die Dämpfung der Lichtleitermode beeinflußt. Die Dämpfung einer Lichtleitermode wird durch die Absorption und die Qualität der Oberflächen des lichtleitenden Mediums selbst und die Absorption der angrenzenden Moden bestimmt. Für eine gute laterale Auflösung soll die Dämpfung der Lichtleitermode möglichst groß sein.

Die vertikale Auflösung liegt im Sub-Nanometer-Bereich, d.h. Dickenunterschiede einer lichtleitenden Schicht von weniger als 1 nm führen zu einer deutlich unterschiedlichen Reflexion und somit zu einem beobachtbaren Kontrast.

Durch Anlegen eines elektrischen Feldes an die zu untersuchende Schicht oder an das zu untersuchende Schichtsystem kann aufgrund des guten Auflösungsvermögens eine Brechungsindexänderung des elektro-optisch aktiven Systems beobachtet werden. Das E-Feld ändert die Elektronendichteverteilung des gepolten Systems und verursacht somit eine Brechungsindexänderung des Systems. Diese Änderung führt zu einer Modenverschiebung bezüglich des Minimumwinkels, die durch Veränderung des Kontrastes deutlich wird. Somit ist es möglich, nicht nur die laterale und vertikale Struktur der zu untersuchenden Schicht bzw. des zu untersuchenden Schichtsystems zu erkennen, sondern auch die Qualität des durch Polung induzierten elektro-optischen Effektes, die durch die Orientierungsverteilung der Chromophoren im System gegeben ist. Die Überprüfung auf eine homogene Verteilung der funktionalisierten Eigenschaften in der Schicht ist somit gegeben.

Die erfindungsgemäß zu verwendende Vorrichtung zur Untersuchung der physikalischen Eigenschaften von dünnen Schichten ist mechanisch und optisch einfach aufgebaut. Sie kann als elektro-optisches Mikroskop bezeichnet werden. Bevorzugt wird für die Erzeugung von Lichtleitermoden die Prismenkopplung verwendet, wobei an die Prismenoberfläche ein Objektträger mittels Immersionsflüssigkeit geklebt wird, auf dessen Rückseite eine Metallschicht und auf diese die zu untersuchende Schicht oder das zu untersuchende Schichtsystem aufgebracht ist. Alternativ kann die Metallschicht und die zu untersuchende Schicht bzw. das Schichtsystem auch direkt auf die Prismenoberfläche aufgebracht sein. Auf die Gegenseite der zu untersuchenden Schicht bzw. des Schichtsystems wird direkt eine aus dem gleichen Metall bestehende Elektrode aufgebracht. Als Metalle kommen hierfür Silber, Gold, Kupfer sowie Aluminium oder Schichtsysteme aus diesen Metallen zum Einsatz. Als besonders vorteilhaft hat sich die Verwendung eines Schichtsystems, bestehend aus 2 bis 5 nm Chrom und 45 nm Gold erwiesen. Der dadurch entstandene Spiegel wird mit parallelem monochromatischen, farbigem oder weißem p- oder s-polarisierten Licht durch eine der beiden freien Seitenflächen des Prismas unter flachem Winkel beleuchtet und mit Hilfe einer achromatischen Linse kleiner Brennweite, welche auf den Spiegel fokussiert ist, durch die andere freie Seitenfläche des Prismas auf einen Schirm, eine Video-Kamera oder ein Okular abgebildet. Die Gegenelektrode wird ebenfalls als ein Schichtsystem aus 2 bis 5 nm Chrom und 100 nm Gold aufgebracht. Die beiden Elektroden werden mit Hilfe von Leitsilber kontaktiert und an einem Funktionsgenerator angeschlossen.

Als zu untersuchende Schichten kommen hinsichtlich Brechungsindex, Dicke und elektro-optische Funktion strukturierte dünne dielektrische Schichten (z.B. organische mit NLO-Farbstoffen gemischte Polymere, Copolymere oder Elastomere), beispielsweise solche mit einer Dicke von 100 nm bis 1 mm in Frage. Die Schichten können z.B. durch Aufschleudern oder mit der Langmuir-Blodgett-Kuhn-Technik auf die Metallschicht aufgebracht werden. Außerdem können hinsichtlich Brechungsindex, Dicke und elektro-optischer Funktion strukturierte Schichten mit einer Dicke von 0,1 bis 100 nm untersucht werden. Dazu wird auf das Metall zweckmäßigerweise zuerst eine lichtleitende dielektrische Schicht, z.B. durch Aufschleudern, oder mit der Langmuir-Blodgett-Kuhn-Technik (LBK-Technik) aufgebracht, auf die dann die zu untersuchende Schicht z.B. durch LBK-Technik, Aufschleudern, Adsorption aus der Flüssigphase, Gießen oder Aufdampfen aufgebracht wird.

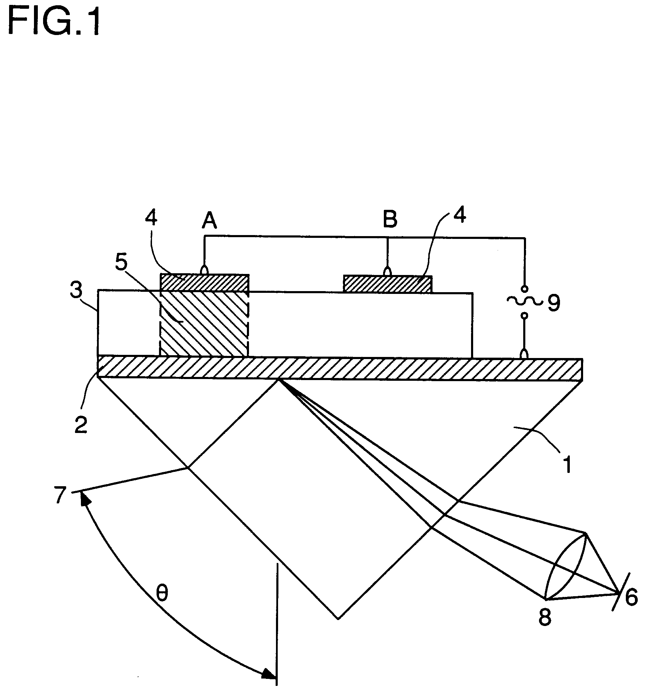

Figur 1 zeigt schematisch den Aufbau einer für das erfindungsgemäße Verfahren verwendeten Vorrichtung.

Auf der Basis eines 90° Glasprismas (BK-7) 1, das als Wellenleiterkoppler in einer Kretschmann Anordnung dient, wird eine Elektrode 2 aufgedampft. Auf die Elektrode 2 wird ein dünner nicht-linear elektro-optisch aktiver Film 3 aufgeschleudert. Nach dem Trocknen der Schicht werden zwei Elektroden 4 als Top-Elektroden aufgedampft. Der Bereich 5 unter der Elektrode A wird bei einer Temperatur oberhalb des Glaspunktes und einer Gleichspannung gepolt. Der Bereich B dient als ungepolter Referenzkanal. Die beiden Bereiche werden abgebildet durch die Aufnahme der Bilder über eine TV-Kamera 6, die das reflektierte Licht eines Lasers 7 als Funktion des Einfallswinkels aufnimmt. Die Bilder die mittels einer einfachen Linse 8 auf der TV-Kamera 6 abgebildet werden, werden auf einem magnetischen Band gespeichert. Bei einer elektro-optisch aktiven Schicht (Bereich A) kann durch Anlegen eines elektrisch modulierten Feldes 9 zwischen den beiden Elektroden 4 und 2 die Verteilung des elektro-optischen Effektes beobachtet werden.

### Beispiel

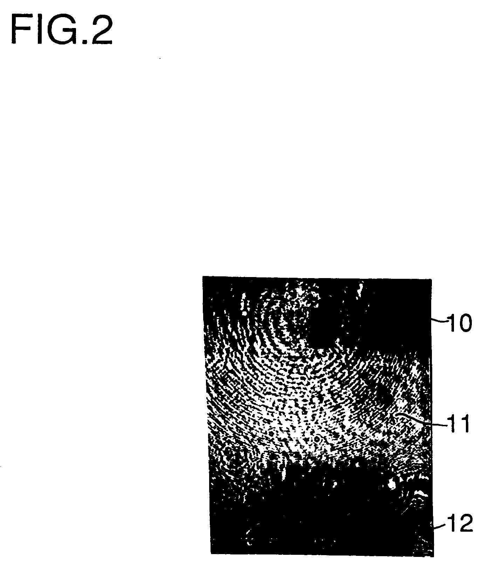

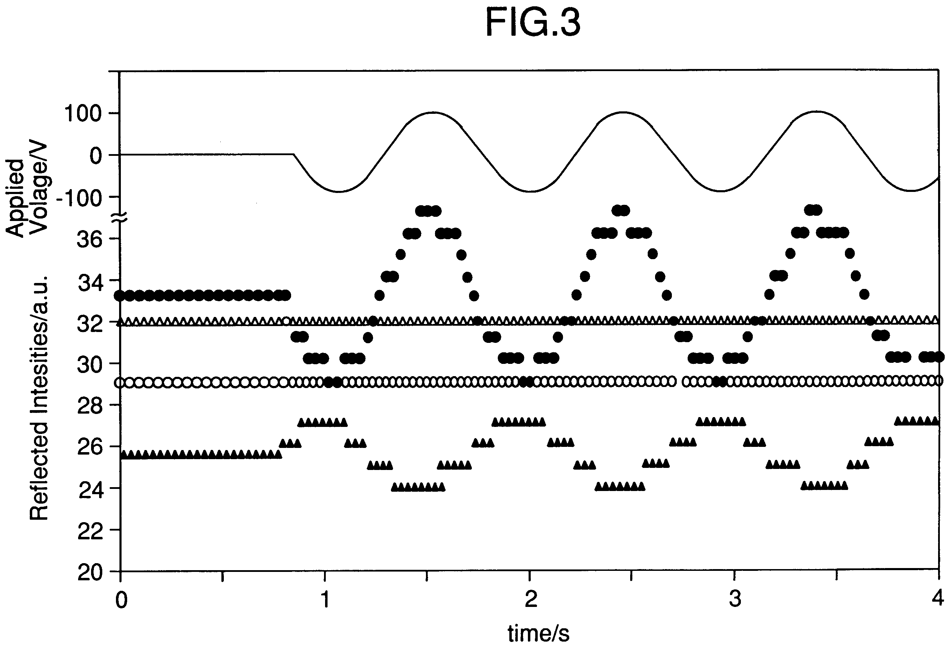

Das zu untersuchende Schichtsystem ist zusammengesetzt aus der Goldelektrode 2 mit einer Dicke von d = 51 nm und dem Polymerfilm 3 bestehend aus einer Wirts-Gast Matrix von PMMA (Poly-methylmethacrylat) und 10 Gew.% Disperse Red 1 (4-(N,N'-ethyl-ethanol)amin-4'-nitroazobenzol, DR 1). Der Polymerfilm 3 wurde aus einer 20 %igen 2-Ethoxyethylacetatlösung auf die Goldelektrode 2 aufgeschleudert. Nach Trocknen der Polymerschicht 3 (T = 80°, 12 h im Vakuum) wurden die Top-elektroden 4 mit einer Breite von ca. 5 mm auf den Polymerfilm 3 aufgebracht. Anschließend wurde der Bereich A oberhalb Tg bei 110°C unter Anlegen eines Gleichstromfeldes von E = 100 V/µm gepolt. Um die Empfindlichkeit der Untersuchungsmethode aufzuzeigen, wird der Probe eine Woche Zeit gelassen, um sich zu relaxieren. In Figur 2 wird der Bildausschnitt eines mit p-polarisiertem Licht angeregten Polymerfilms 3 gezeigt. 10 ist der mit der Topelektrode bedeckte ungepolte Bereich B, 11 ist der unbedeckte Polymerfilm und 12 der mit Gold bedeckte gepolte Bereich A. Der dunkle Bereich zeigt an, daß die reflektierte Intensität des HeNe-Lasers (633 mm) 7 ein Minimum hat, d.h. eine Lichtwellenleitermode angeregt wurde. Durch Anlegen eines elektrisch modulierten Feldes 9 an die Elektroden sind die reflektierten Intensitäten des gepolten und ungepolten Feldes verschieden. Dies ist leicht mit dem Auge zu erkennen und durch eine Grauwertanalyse der aufgezeichneten Bilder nachzuweisen. Die dazugehörigen Daten sind in Figur 3 zu erkennen. Vor dem Einschalten des mit 0,95 Hertz und 220 V Spannung (Spitze-Spitze) angelegten Feldes, erkennt man einen leichten Unterschied der Intensität vom ungepolten (offene Symbole) und gepolten (volle Symbole) Zustand. Dies ist abhängig vom Einkopplungswinkel ϑ. Die Daten gekennzeichnet durch einen Kreis wurden bei einem Einfallswinkel von ϑ = 58.8°, die mit Dreiecken gekennzeichnet bei einem Winkel von ϑ = 59,3° aufgenommen. Hier wird der Unterschied der zwei verschiedenen Bereiche deutlich, wenn die modulierte Spannung angelegt wird: während der gepolte Bereich bezüglich seines elektro-optischen Verhaltens durch die reflektierte Intensität dem elektrischen Signal folgt, verbleibt der ungepolte Bereich bei konstanter Intensität. Dies ist in Figur 3 gezeigt, bei der die durchschnittlichen Grauwerte durch Analyse jedes zweiten aufgezeichneten Bildes, das einem zeitlichen Intervall von 1/30 Sekunde entspricht, aufgetragen wurde.

## Patentansprüche

1. Verfahren zu Untersuchung der physikalischen Eigenschaften dünner elektro-optisch aktiver Schichten, dadurch gekennzeichnet, daß in der zu untersuchenden Schicht oder dem zu untersuchenden Schichtsystem durch die Einstrahlung polarisierten Lichtes Lichtleitermoden angeregt werden, die aufgrund des angelegten modulierten elektrischen Feldes an der zu untersuchenden Probe laterale Unterschiede der elektro-optischen (EO) Eigenschaften wiedergeben.

2. Verfahren nach Anspruch 1, dadurch gekennzeichnet, daß die zu untersuchende Schicht oder das zu untersuchende Schichtsystem auf eine beliebige Festkörperoberfläche aufgebracht ist.

3. Verfahren nach Anspruch 1 und 2, dadurch gekennzeichnet, daß die zu untersuchende Schicht oder das zu untersuchende Schichtsystem auf eine Metall- oder Halbleiterschicht aufgebracht ist.

4. Verfahren nach Anspruch 1 bis 3, dadurch gekennzeichnet, daß zur Anregung von Lichtleitermoden in der zu untersuchenden Schicht oder dem zu untersuchenden Schichtsystem eine Kopplungsanordnung verwendet wird.

5. Verfahren nach Anspruch 1 bis 4, dadurch gekennzeichnet, daß als Kopplungsanordnung ein Prisma verwendet wird.

6. Verfahren nach Anspruch 1 bis 5, dadurch gekennzeichnet, daß die zu untersuchende Schicht oder das zu untersuchende Schichtsystem direkt auf der mit einem Metall- oder Halbleiterfilm beschichteten Basisfläche des Prismas aufgebracht ist.

7. Verfahren nach Anspruch 1 bis 4, dadurch gekennzeichnet, daß als Kopplungsanordnung eine Gitterstruktur auf einer Festkörperoberfläche verwendet wird, auf die die zu untersuchende Schicht oder das zu untersuchende Schichtsystem aufgebracht wird.

8. Verfahren nach Anspruch 1 bis 7, dadurch gekennzeichnet, daß auf die zu untersuchende Schicht oder das zu untersuchende Schichtsystem eine Gegenelektrode aufgebracht wird.

9. Verfahren nach Anspruch 1 bis 8, dadurch gekennzeichnet, daß die Gegenelektrode als Metall- oder Halbleiterschicht direkt auf die zu untersuchende Schicht oder das zu untersuchende Schichtsystem aufgebracht wird.

10. Verfahren nach Anspruch 1 bis 8, dadurch gekennzeichnet, daß die Gegenelektrode als Metall- oder Halbleiterschicht indirekt über abstandhaltende Isolatoren an die zu untersuchende Schicht oder das zu untersuchende Schichtsystem angebracht wird.

11. Verfahren nach Anspruch 1 bis 10, dadurch gekennzeichnet, daß beide Elektroden für das Anlegen des elektrischen Feldes nebeneinander in einem bestimmten Abstand auf die zu untersuchende Schicht oder das zu untersuchende Schichtsystem aufgebracht sind.
